# FASCICULE DE BREVET EUROPEEN

(11) **EP 3 927 634 B1**
(45) Date de publication et mention de la délivrance du brevet: **09.11.2022**
(21) Numéro de dépôt: 20704556.8
(22) Date de dépôt: 19.02.2020
(51) Int. Cl.: B65G 47/88

(54) **DISPOSITIF DE BUTEE POUR L'ARRET ET LE SOULEVEMENT D'UN OBJET PAR RAPPORT A UN SUPPORT DE CONVOYAGE**
STOPPVORRICHTUNG ZUM ANHALTEN UND HEBEN EINES GEGENSTANDES IN RELATION ZU EINEM FÖRDERTRÄGER
STOP DEVICE FOR STOPPING AND LIFTING AN OBJECT RELATIVE TO A CONVEYING SUPPORT

(30) Priorité: 20.02.2019 FR 1901673
(43) Date de publication de la demande: 29.12.2021
(73) Titulaire: MECATHERM, 67130 Barembach (FR)
(72) Inventeur: SERGENT, Olivier, 75007 PARIS (FR); PINEAU, Damien, 49340 TREMENTINES (FR)
(74) Mandataire: Cabinet Bleger-Rhein-Poupon
(86) Numéro de dépôt international: PCT/EP2020/054326
(87) Numéro de publication internationale: WO 2020/169649

(56) Documents cités:
- EP-A1- 0 663 356
- WO-A1-2006/098726
- DE-A1- 3 244 698

## Description

La présente invention concerne un dispositif de butée pour l'arrêt et le soulèvement d'un objet qui se déplace sur un convoyeur, ou support de convoyage.

Le dispositif de butée de l'invention ne nécessite pas un arrêt de ce convoyeur, n'entraine pas de chocs, et utilise, de manière avantageuse, l'énergie cinétique de l'objet pour le désolidariser du convoyeur.

La présente invention trouvera son application principalement, mais non limitativement, dans le domaine de la boulangerie industrielle, qui met en œuvre de tels supports de convoyage.

Ainsi, l'objet en question qui est arrêté et soulevé du support de convoyage peut être, plus particulièrement, un support de produits de boulangerie, pâtisserie, viennoiserie et similaires, sur lequel lesdits produits sont disposés en vue de leur déplacement au moyen dudit support de convoyage.

Ledit support de produits de boulangerie peut se présenter notamment sous la forme d'une plaque.

Traditionnellement, les installations de fabrication de tels produits intègrent généralement une pluralité d'unités distinctes en vue du traitement de ces produits, par exemple au moins une unité de fermentation et/ou une unité de cuisson et/ou une unité de refroidissement et/ou encore une unité de surgélation.

Ainsi, dans ce domaine de la boulangerie industrielle, la pâte boulangère subit, dans un premier temps, une étape de division en une pluralité de pâtons, puis une étape subséquente de façonnage desdits pâtons.

Ensuite, les pâtons sont déposés sur les supports susmentionnés pour leur transport au sein de chacune des différentes unités qui composent l'installation de production, et également pour passer depuis une unité à l'unité suivante selon le process de fabrication détaillé ci-dessus.

Les supports sur lesquels viennent reposer les pâtons peuvent être de différentes natures ; il existe ainsi de nombreux types de supports de produits de boulangerie ou analogues.

En particulier, un tel support peut être, par exemple, constitué d'un matériau support monté solidaire d'un cadre, ce dernier constituant alors un châssis assurant la rigidité de l'ensemble en vue de sa manutention.

Le matériau support peut notamment consister en une plaque, notamment une tôle métallique ou plastique, plane ou bien conformée, par pliage ou par emboutissage, dans l'optique de former des logements en creux permettant la réception de pâtons.

Pour le déplacement au sein même des unités d'une installation de production de produits de boulangerie industrielle, ou entre les différentes unités qui composent ladite installation, les supports sur lesquels reposent les pâtons à traiter sont généralement entrainés au moyen d'une succession de systèmes ou supports de convoyage, de type tapis transporteurs, bandes de transport, ou bien encore chaînes de transport, ces systèmes pouvant présenter des caractéristiques particulières selon l'unité dans laquelle ils sont disposés.

Ainsi, de manière connue, dans les unités de cuisson des installations déjà existantes de l'état de la technique, notamment dans les fours tunnels, les supports de convoyage, de type tapis de transport ou bandes de transport, peuvent se présenter sous la forme d'un support « plein », constitué de lames de pierre ou de plaques métalliques jointives et articulées entre elles pour constituer, dans le trajet horizontal, une sole de pierre ou métallique pleine et continue, jusqu'à l'extrême inverse, où ce support de convoyage peut comporter un maillage très ouvert, toujours en un matériau métallique ou plastique.

Les lames, le maillage, ou autre, composant le support de convoyage, décrivent un circuit bouclé autour d'au moins deux rouleaux de renvoi et sont entrainés en mouvement, au travers de moyens moteurs et de moyens d'entrainement adaptés.

Dans les autres unités qui composent lesdites installations de production, les supports de convoyage sont similaires, et souvent fabriqués à partir d'un matériau métallique ou plastique.

Quoiqu'il en soit, pour diverses raisons et en divers endroits de l'installation de production, un arrêt d'un ou de plusieurs support(s) de produits de boulangerie peut s'avérer nécessaire, par exemple pour synchroniser le traitement des supports entre deux unités de traitement successives de ladite installation, tandis que le support de convoyage continue de défiler sous lesdits supports.

En particulier, dans le domaine de la boulangerie industrielle, les supports de produits peuvent être stoppés tout en étant maintenus sur le support de convoyage, au contact de celui-ci ; un tel arrêt peut être effectué, par exemple, au moyen d'un système de butée faisant saillie du support de convoyage audevant ou par l'arrière d'un support de produits, tenant compte de la direction de déplacement des supports de produits sur le support de convoyage, pour empêcher ledit support de produits de poursuivre son cheminement.

Un tel système engendre inévitablement des frottements entre le support de produits à l'arrêt forcé et le support de convoyage qui continue de défiler dessous, aboutissant, d'une part, à l'émission de particules de poussières qu'il conviendra d'éliminer pour éviter toute détérioration des produits de boulangerie notamment, d'autre part à une surconsommation électrique entrainée par les frottements et, également, à une usure prématurée du support de produits soumis à de tels frottements, qui est notamment susceptible de perdre de sa planéité et de sa robustesse.

A noter encore que le support de produits qui suit le support qui est arrêté par la butée est susceptible de venir entrechoquer cette dernière, et ainsi de suite, entrainant, là encore, une usure des supports de produits, la génération de nuisances sonores dues au bruit de chocs, celles-ci s'avérant désagréables pour les opérateurs.

Également, l'entrechoquement de supports de produits successifs peut entrainer un déplacement des produits reposant sur ces supports, un tel déplacement étant susceptible d'avoir une influence sur la qualité du traitement en aval et du produit final, par exemple une altération de l'homogénéité de la cuisson par des produits au contact les uns des autres, etc.

Enfin, les frottements des supports de produits sur le système de convoyage génèrent des efforts importants sur les chaines, imposant un sur-dimensionnement des moteurs d'entrainement, ce qui entraîne nécessairement une consommation électrique importante et inutile. DE 32 44 698 A1 décrit un dispositif selon le préambule de la revendication 1.

L'invention offre la possibilité de pallier, au moins en partie, les divers inconvénients de l'état de la technique en proposant un mécanisme de butée permettant, d'une part, l'arrêt, sans chocs, d'objets qui reposent sur un support de convoyage, mais également, d'autre part, le soulèvement de ces objets par rapport audit support de convoyage, en sorte que, lorsque ledit objet est arrêté, il n'est plus au contact de la surface du support de convoyage.

A cet effet, la présente invention concerne un dispositif de butée selon la revendication 1.

De manière particulièrement avantageuse, dans un mode de réalisation particulier du dispositif de butée selon l'invention, lesdits moyens d'entrainement actionnant les moyens de relevage sont en liaison avec le levier formant butée au travers d'une course à vide définissant des moyens de temporisation entre, d'une part, le passage du levier formant butée depuis sa position de butée d'objet dans sa position d'attente en passant par sa position inactive effacée et, d'autre part, le passage des moyens de relevage depuis leur position de relevage de plaque dans leur position de repos.

Selon une autre particularité de ce mode de réalisation, lesdits moyens de relevage comportent au moins une pluralité de galets reliés entre eux au moyen d'une structure adaptée comportant au moins une bielle.

Tout préférentiellement, lesdits moyens d'entrainement actionnant les moyens de relevage comportent au moins une bielle dont une première extrémité prend appui sur un prolongement dudit levier au-delà de son axe de pivotement, bielle dont la seconde extrémité est montée articulée sur une came que comportent lesdits moyens de relevage, ladite came étant pivotante autour d'un axe parallèle audit axe de pivotement dudit levier, le passage du levier formant butée depuis sa position d'attente dans sa position de butée poussant la bielle qui confère une rotation à la came autour de l'axe.

Dans un exemple de réalisation avantageux, ledit levier formant butée comporte un fourreau dans lequel est monté mobile un doigt de butée entre une position saillante active et une position effacée, tandis que lesdits moyens de commande consistent en un actionneur apte, d'une part, à repousser ledit doigt de butée dans une position saillante active lorsque ledit levier occupe ses positions d'attente et de butée et, d'autre part, à retirer ledit doigt de butée dans une position effacée correspondant à la position effacée inactive du levier.

De manière avantageuse dans le dispositif de butée selon l'invention, la course à vide est définie par la mobilité dudit doigt de butée entre sa position saillante active et sa position effacée sous l'effet de l'actionneur.

Le dispositif de butée de l'invention comporte encore, de préférence, des moyens de blocage amenés en position active de blocage lorsque les moyens de relevage sont en position de relevage et repoussés en position de déblocage sous l'action desdits moyens de commande.

De manière intéressante, ces moyens de blocage consistent en une roue à rochet montée sur l'axe de la came, ladite came coopérant avec un cliquet sur lequel agit une tringle de commande en liaison avec lesdits moyens de commande.

Dans un autre mode de réalisation du dispositif de butée de l'invention, encore plus avantageux, lesdits moyens de relevage de l'objet consistent en un chariot mobile de relevage comportant une surface de réception plane ou sensiblement plane sur laquelle est prévue de reposer ledit objet, ledit chariot étant conçu mobile dans la direction de déplacement de l'objet sur le support de convoyage pour passer de la position de repos, où ledit chariot se trouve en dessous d'un plan que définit ledit support de convoyage, à la position de relevage dans laquelle il se trouve au-dessus dudit plan.

Dans ce mode de réalisation, le levier formant butée, défini mobile entre la position d'attente et la position de butée, est directement relié audit chariot mobile de relevage. Ce levier comporte plus particulièrement un élément formant butoir à l'extrémité aval dudit chariot mobile en tenant compte de ladite direction de déplacement de l'objet sur le support de convoyage, ledit élément formant butoir se présentant saillant par rapport à ladite surface de réception dudit chariot mobile et faisant également saillie par rapport au plan que définit ledit support de convoyage lorsque ledit levier formant butée est dans sa position d'attente.

Ledit levier formant butée est prolongé, sous le chariot mobile, par au moins une console support aval d'au moins un galet en appui sur une rampe d'inclinaison ascendante dans la direction de déplacement de l'objet sur le support de convoyage, ladite rampe étant associée à une structure support avec laquelle elle définit, dans ce mode de réalisation, lesdits moyens d'entrainement desdits moyens de relevage, sous la forme du chariot mobile, depuis leur position de repos vers leur position de relevage.

Dans ce mode de réalisation, ledit dispositif comporte également, avantageusement, des moyens de maintien du levier formant butée dans sa position de butée et du chariot mobile dans sa position de relevage.

En plus de ladite console support aval d'au moins un galet en appui sur ladite rampe, ce dispositif de butée peut comporter une console support amont d'au moins un galet, celle-ci s'étendant sous l'extrémité amont du chariot mobile tenant compte de la direction de déplacement de l'objet sur le support de convoyage, ladite console support amont d'au moins un galet étant en appui sur une rampe d'inclinaison ascendante dans ladite direction de déplacement, ladite rampe étant associée à la structure support.

Cette structure support comporte préférentiellement deux flasques latéraux entretoisés entre lesquels s'inscrit ledit chariot mobile, tandis que lesdits moyens de maintien du levier formant butée dans sa position de butée et du chariot mobile dans sa position de relevage sont associés auxdits flasques latéraux.

En ce qui concerne à présent lesdits moyens de maintien du levier formant butée dans sa position de butée et du chariot mobile dans sa position de relevage, ceux-ci peuvent être définis sous la forme d'un cliquet, et comporter, par exemple, une lame à dents de scie associée à ladite console support de galet du chariot mobile, ladite lame à dents de scie comprenant une denture apte à coopérer avec un doigt de blocage que comporte un loquet à rappel élastique en position de blocage.

Toujours dans ce mode de réalisation, les moyens de commande de déplacement du levier formant butée entre sa position de butée et sa position inactive effacée peuvent, par exemple, comporter des moyens de basculement de la rampe d'inclinaison ascendante depuis une position de commande de relevage de ladite rampe dans une position d'effacement de cette dernière. Lesdits moyens de basculement sont plus particulièrement définis par un montage pivotant de ladite rampe d'inclinaison ascendante à son extrémité aval autour d'un axe de pivotement, l'extrémité amont de ladite rampe étant, quant à elle, solidaire de moyens de commande de basculement.

Lesdits moyens de commande de basculement comportent préférentiellement une genouillère coopérant, de manière articulée, avec ladite extrémité amont de la rampe d'inclinaison ascendante, cette genouillère étant repliée ou étendue sous l'action d'un vérin complétant lesdits moyens de commande de basculement.

En ce qui concerne les moyens complémentaires pour repousser ledit levier formant butée, depuis sa position inactive effacée dans sa position d'attente, ils peuvent être définis, dans ce mode de réalisation, par lesdits moyens de commande de basculement, ces derniers étant aptes à repousser ladite rampe depuis sa position d'effacement dans sa position de commande de relevage.

D'autres caractéristiques et avantages de l'invention ressortiront de la description détaillée qui va suivre des modes de réalisation non limitatifs de l'invention, en référence aux figures annexées dans lesquelles :
[Fig.1] représente, de manière schématique, un exemple d'installation de production industrielle de produits de boulangerie ou similaire, comprenant deux unités de traitement U1 et U2 entre lesquelles est ménagé un support de convoyage, de type tapis, bande ou chaîne de transport, permettant un acheminement de supports desdits produits depuis une première unité de traitement amont U1 vers une seconde unité de traitement aval U2 ;
[Fig.2] représente schématiquement une vue de côté d'un premier mode de réalisation de dispositif de butée pour l'arrêt et le soulèvement d'un objet, de type plaque support de produits de boulangerie ou analogues, par rapport à un support de convoyage, le levier formant butée mobile étant dans sa position d'attente, avec un doigt de butée en position saillante active, et les moyens de relevage dudit objet étant en position de repos ;
[Fig.3] est une représentation schématique similaire à la figure 2, le levier formant butée mobile étant dans sa position de butée avec le doigt de butée en position saillante active, et les moyens de relevage dudit objet sont en position de relevage ;
[Fig.4] est une représentation schématique similaire aux figures 2 et 3, le levier formant butée mobile étant dans sa position inactive effacée, avec le doigt de butée en position effacée, tandis que les moyens de relevage dudit objet sont encore en position de relevage ;
[Fig.5] est une représentation schématique similaire aux figures 2 à 4, le levier formant butée mobile étant dans sa position inactive effacée avec le doigt de butée en position effacée, tandis que les moyens de relevage dudit objet sont repassés en position de repos pour une évacuation du support de produits sur le support de convoyage ;

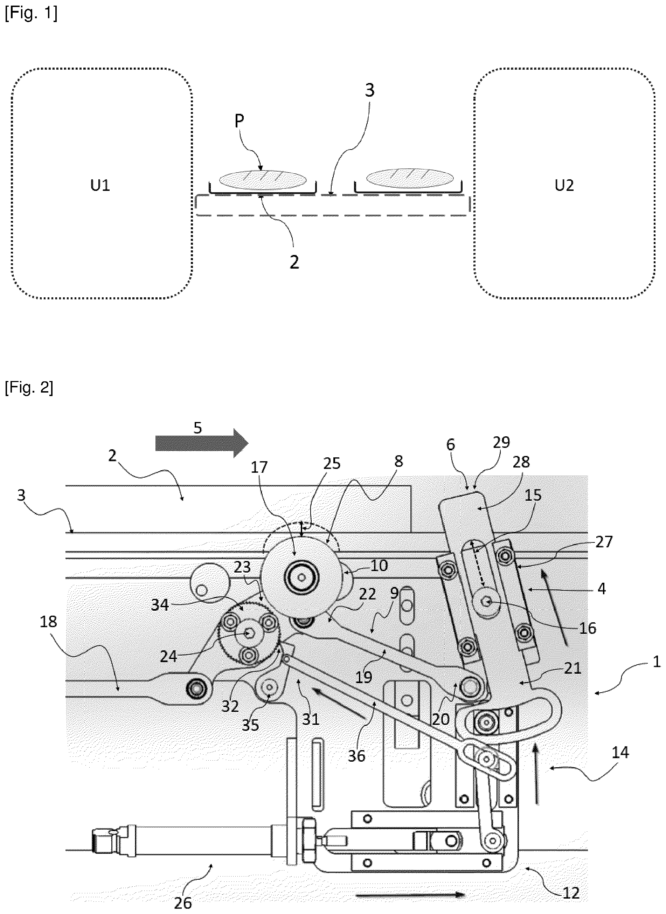

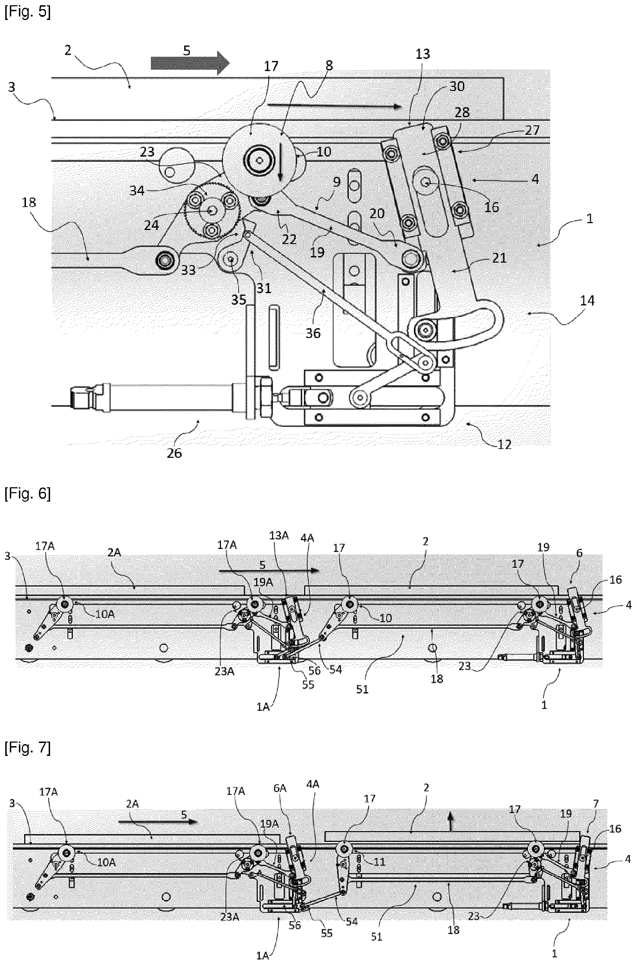

[Fig.6] illustre une vue globale, de côté, d'une structure support incorporant, en aval tenant compte de la direction d'avancement du support de convoyage symbolisée par la flèche, l'ensemble des moyens composant un premier dispositif de butée similaire à celui illustré sur les figures 2 à 5, ainsi que, en amont, un second dispositif de butée lié mécaniquement au premier dispositif de butée, les leviers formant butée mobile des premier et second dispositifs de butée étant, respectivement, en position d'attente et en position inactive effacée, les moyens de relevage des deux dispositifs de butée étant en position de repos ;
[Fig.7] est une vue similaire à la figure 6, le levier formant butée du premier dispositif de butée étant en position de butée et les moyens de relevage de celui-ci étant en position de relevage tandis que le levier du second dispositif de butée est en position d'attente, et les moyens de relevage de celui-ci sont en position de repos ;
[Fig.8] illustre, de manière schématique, selon une vue de côté, un second mode de réalisation du dispositif de butée selon la présente invention ;
[Fig.9] illustre, de manière schématique, une variante du second mode de réalisation représenté sur la figure 8 ;
[Fig. 10] représente, de manière schématique, selon une vue de côté, un troisième mode de réalisation du dispositif de butée selon la présente invention, le levier formant butée mobile comportant ici un élément formant butoir, relié directement à des moyens de relevage d'un objet, pouvant notamment consister en une plaque support, lesdits moyens de relevage consistant en un chariot mobile de relevage, ledit levier formant butée étant ici dans sa position d'attente et les moyens de relevage étant en position de repos ;
[Fig. 11] constitue une représentation schématique similaire à la figure 10, une plaque support de produits de boulangerie ou analogues, arrivant, au travers du support de convoyage, au contact de l'élément formant butoir du levier ;
[Fig. 12] illustre une représentation schématique similaire aux figures 10 et 11, le levier formant butée étant passé dans une position de butée, tandis que le chariot mobile de relevage, sur lequel se trouve l'objet, est passé dans une position de relevage dudit objet ;
[Fig. 13] illustre une représentation schématique similaire aux figures 10 à 12, le chariot mobile étant dans une position de relevage de l'objet, le maintien dans cette position de relevage étant assurée par des moyens de maintien définis sous la forme d'un cliquet ;
[Fig. 14] est une représentation schématique similaire aux figures 10 à 13, sur laquelle le levier formant butée est en position inactive effacée, les moyens de relevage étant repassés en position de repos pour une évacuation de la plaque support de produits sur le support de convoyage.

La présente invention, telle que représentée sur les figures des dessins ci-joint, concerne un dispositif de butée 1 plus particulièrement destiné à arrêter un objet 2 en déplacement sous l'impulsion d'un support de convoyage 3 sur lequel repose cet objet 2.

Plus particulièrement, cet objet 2 est illustré sur le schéma correspondant à la figure 1 sous la forme d'une plaque, notamment du type plaque support pour le transport de produits P de boulangerie, viennoiserie, pâtisserie ou similaires, pour le passage de ces produits au travers d'une installation de production, comprenant, par exemple, une unité de fermentation U1, de cuisson U2 et/ou de congélation.

Le dispositif 1 de butée selon l'invention a pour fonction non seulement d'arrêter lesdits objets 2, en l'occurrence les plaques 2, le long du support de convoyage 3, mais aussi de les soulever pour les dégager de ce support de convoyage 3, celui-ci se présentant sous la forme d'une bande, d'un tapis ou de chaînes de transport.

Ce dispositif de butée 1 se veut également à même d'arrêter et soulever, selon le cas, individuellement chaque objet 2 lorsqu'il est souhaité d'éviter l'entrechoquement desdits objets.

En l'occurrence, dans le cadre de l'application à des plaques supports de transport de produits de boulangerie, viennoiserie, l'entrechoquement des supports est non seulement source de nuisances sonores mais, en outre, peut conduire au déplacement des produits sur les supports, un tel déplacement étant susceptible d'avoir une influence sur la qualité du traitement en aval : cuisson altérée par des produits au contact les uns des autres, reprise nécessaire des produits par des moyens de manutention adaptés, etc.

En soulevant les objets 2 lorsque ceux-ci sont maintenus à l'arrêt par des moyens de butée adaptés, on évite le frottement de ces objets 2 sur le support de convoyage 3 qui est lui en déplacement continu, frottement qui peut abimer ces objets 2, sans compter qu'il est générateur de poussières.

Selon l'invention, le dispositif de butée 1 comporte un levier 4 formant butée, défini mobile dans la direction 5 de déplacement des plaques 2, ceci entre une position d'attente 6 et une position de butée 7.

Toujours selon l'invention, des moyens de relevage 8 d'un objet 2, tel qu'une plaque support 2, sont actionnés par des moyens d'entraînement 9 en liaison avec ledit levier 4 pour passer depuis une position de repos 10 à une position de relevage 11 dudit objet 2, et inversement.

De plus, le dispositif de butée 1 comporte encore des moyens de commande 12 de déplacement du levier 4 formant butée entre la position de butée 7 et une position inactive 13, effacée au passage d'une plaque 2 ou de tout autre objet 2.

Plus particulièrement, lesdits moyens d'entraînement 9 sont définis pour amener les moyens de relevage 8 depuis la position de repos 10 dans la position de relevage 11 au passage du levier 4 formant butée depuis sa position d'attente 6 dans la position de butée 7.

Par ailleurs, lesdits moyens de commande 12 coopèrent avec des moyens complémentaires 14 pour repousser le levier formant butée 4 depuis sa position inactive effacée 13 dans sa position d'attente 6.

Quant aux moyens d'entraînement 9, actionnant les moyens de relevage 8, ils peuvent être, par exemple mais non limitativement, en liaison avec le levier formant butée 4 au travers d'une course à vide 15 définissant des moyens de temporisation entre, d'une part, le passage du levier 4 formant butée depuis sa position de butée 7 dans la position d'attente 6 en passant par la position inactive effacée 13 et, d'autre part, le passage des moyens de relevage 8 depuis leur position de relevage 11 vers leur position de repos 10.

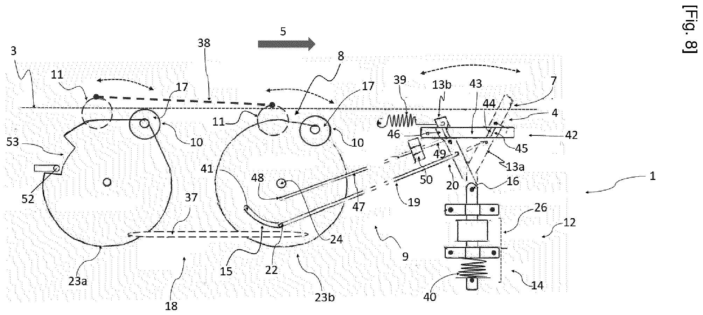

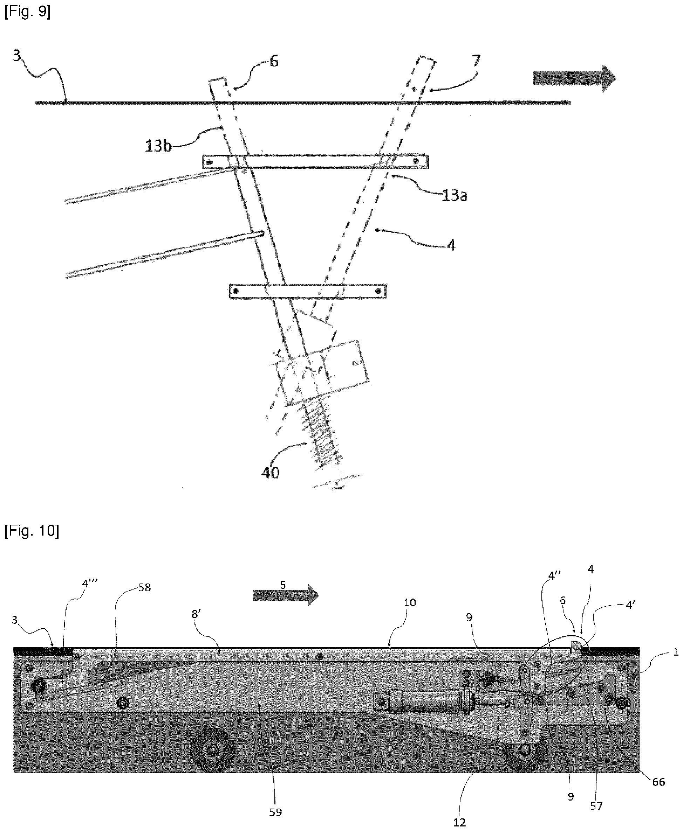

Dans la suite de la description, il sera fait référence tout d'abord à un premier mode de réalisation illustré dans les figures 2 à 7 puis à un deuxième mode de réalisation schématiquement illustré dans les figures 8 et 9, et enfin à un troisième mode de réalisation particulièrement avantageux, celui-ci étant représenté sur les figures 10 à 14.

Ainsi, sur la figure 2, il est illustré le levier formant butée 4 dans sa position d'attente 6, ce levier 4 étant monté basculant autour d'un axe 16 perpendiculaire à la direction 5 de déplacement d'une plaque 2.

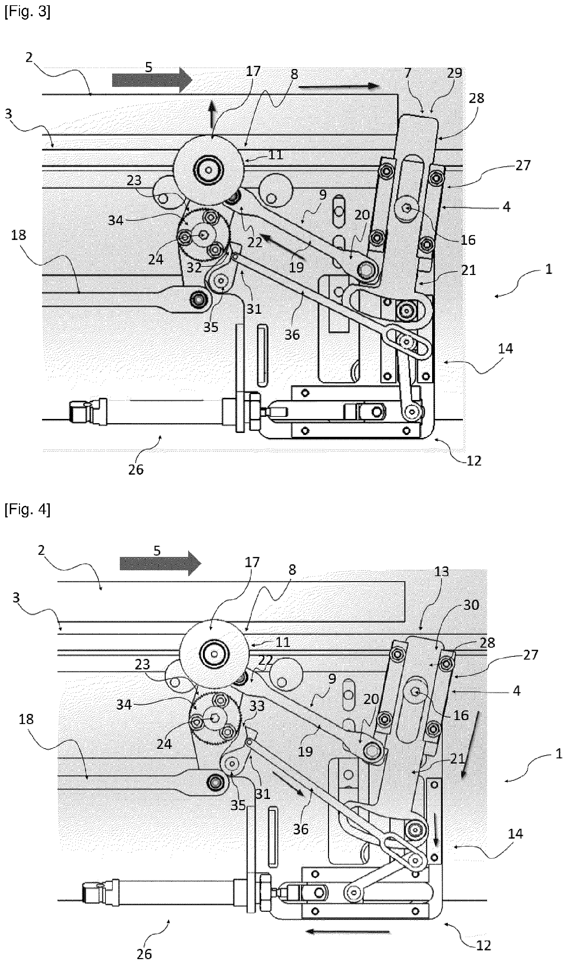

Ainsi, ce levier 4 formant butée, par pivotement, peut passer de cette position d'attente 6 dans la position de butée 7 illustrée notamment sur la figure 3.

Quant aux moyens de relevage 8, ils peuvent adopter différentes formes de réalisation selon l'objet 2 à soulever. Ainsi, ils peuvent, par exemple, emprunter la forme d'un plateau, ou plus préférentiellement d'un chariot mobile de relevage 8' comme cela sera illustré en référence au troisième mode de réalisation ci-après, voire, comme illustré sur les figures 2 à 9 jointes, de galets 17 dont la disposition et le nombre seront déterminés en fonction de la forme de l'objet 2 à soulever, de sorte que celui-ci puisse reposer en équilibre sur ces galets 17 par ailleurs nécessairement reliés entre eux au moyen d'une structure adaptée 18.

Tout préférentiellement, les moyens de relevage 8 du dispositif de butée 1 de l'invention comportent quatre galets 17, sous la forme d'une paire de galets 17 amont et d'une paire de galets 17 aval, tenant compte de la direction de déplacement 5 du support de convoyage 3, lesdits galets 17 étant reliés entre eux au moyen d'une structure adaptée 18, en sorte que, lorsque lesdits moyens de relevage 8 sont en position de relevage 11, l'objet 2, notamment une plaque support 2 de produits de boulangerie ou similaires de forme généralement rectangulaire, repose sur les quatre galets 17, un à chacun des coins de ladite plaque support 2.

Concernant la structure adaptée 18 reliant les galets 17, celle-ci est schématiquement illustrée sous la forme d'une bielle dans les différentes figures. Il y sera fait référence plus en avant dans la description.

Pour en revenir à présent aux moyens de relevage 8, ceux-ci sont actionnés par des moyens d'entraînement 9 étant en liaison avec le levier 4 formant butée.

Ainsi, ces moyens d'entrainement 9 comportent ici une bielle 19 configurée pour prendre appui, à une première extrémité 20, sur un prolongement 21 du levier 4 formant butée au-delà de son axe de pivotement 16.

Aussi, le déplacement dudit levier 4 depuis sa position d'attente 6 dans sa position de butée 7 a pour conséquence de repousser la bielle 19 par ailleurs montée articulée à sa deuxième extrémité 22 sur une came 23 que comportent les moyens de relevage 8, ladite came 23 portant ainsi, conformément au mode de réalisation avantageux décrit ci-dessus, au moins un galet 17.

Plus particulièrement, la came 23 est pivotante autour d'un axe 24 parallèle à l'axe 16 de pivotement du levier 4 formant butée.

Sur cette came 23 est monté en rotation, et de manière excentrée, le galet 17, tout comme l'extrémité 22 de la bielle 19.

Ainsi, sous l'action de la poussée exercée par le levier 4 passant de sa position d'attente 6 à sa position de butée 7, la bielle 19 confère une rotation à la came 23 autour de l'axe 24 et, de fait, au moyen de relevage 8 qu'elle porte, de préférence un galet 17.

La rotation de la came 23 est telle qu'elle confère au galet 17 une composante de déplacement vertical 25 d'amplitude déterminée par rapport à l'objectif visé, à savoir soulever un objet 2, en l'occurrence une plaque 2, de manière à dégager cette dernière du support de convoyage 3.

Ainsi dans le mode de réalisation correspondant à ces figures, les moyens d'entrainement 9 sont substantiellement définis par le prolongement 21 du levier 4 sous l'axe 16, la bielle 19 et la came 23.

Il convient d'observer, que lorsqu'il est fait référence au galet 17, monté sur cette came 23, ce galet 17 peut être celui d'une structure 18 portant plusieurs galets 17 qui, conjointement, forment une surface d'appui pour l'objet 2 à soulever.

Ainsi, comme vu précédemment, cette surface d'appui, non représentée sur les figures des dessins ci-joints, peut avantageusement être formée par quatre galets 17 en sorte de présenter une forme sensiblement rectangulaire pour soulever un objet 2 tel qu'une plaque support de produits de boulangerie.

Après avoir arrêté et soulevé un objet 2, le dispositif de butée 1 selon l'invention doit être en mesure de s'effacer et libérer cet objet 2 pour lui permettre de reprendre sa progression sur le support de convoyage 3.

Dans ce but, il doit être possible de faire en sorte que le levier formant butée 4 s'efface devant l'objet 2 arrêté.

Les moyens de commande 12 conçus dans ce but ont pour fonction de conférer audit levier 4 un déplacement depuis sa position de butée 7 dans une position inactive effacée 13, visible notamment sur les figures 4 et 5.

Concrètement, ces moyens de commande 12 empruntent la forme d'un actionneur 26 tel un vérin dans le mode de réalisation illustré sur les figures 2 à 7.

Plus particulièrement, dans ce premier mode de réalisation du dispositif de butée 1 illustré aux figures 2 à 7, ledit levier 4 formant butée comporte un fourreau 27 dans lequel est monté mobile un doigt de butée 28 entre une position saillante active 29 dans laquelle il est repoussé par ledit actionneur 26 lorsque ledit levier 4 occupe ses positions respectivement d'attente 6 et de butée 7, ce doigt de butée 28 étant encore susceptible d'être retiré dans une position effacée 30, illustrée plus particulièrement sur les figures 4 et 5, correspondant à la position effacée inactive 13 du levier 4 sous l'action dudit actionneur 26.

Finalement, après avoir retiré l'action de butée exercée par le levier 4, les moyens de relevage 8 doivent regagner leur position de repos 10.

Ainsi, ces moyens de relevage 8 peuvent regagner cette position de repos 10 sous l'action du poids de l'objet 2 qu'ils supportent. Ce poids s'exerce sur les galets 17 entrainant en rotation inverse la came 23, rotation répercutée sur la bielle 19 repoussant, au travers de son extrémité 20, le prolongement 21 du levier 4 formant butée.

Quant à la course à vide 15, définissant les moyens de temporisation entre le passage du levier 4 depuis sa position de butée 7 dans sa position d'attente 6 en passant par sa position inactive effacée 13, mais aussi entre le passage des moyens de relevage 8 depuis la position de relevage 11 dans la position de repos 10, celle-ci est définie par la mobilité du doigt de butée 28 entre sa position saillante active 29 et sa position effacée 30 sous l'effet de l'actionneur 26, cette mobilité étant illustrée par une double flèche en pointillés sur la figure 2.

Cependant, le dispositif de butée 1 selon l'invention peut, comme illustré sur ce mode de réalisation correspondant aux figures 2 à 7, comporter des moyens de blocage 31 amenés en position active de blocage 32 lorsque les moyens de relevage 8 sont en position de relevage 11 et repoussés en position de déblocage 33 sous l'action des moyens de commande 12.

Ces moyens de blocage 31 sont ici illustrés sous forme d'une roue à rochet 34 montée sur l'axe 24 de la came 23 et avec laquelle coopère un cliquet 35 sur lequel agit une tringle de commande 36 en liaison avec lesdits moyens de commande 12, ceux-ci consistant, préférentiellement, en un actionneur 26 de type vérin.

Ainsi, en même temps qu'en retirant le doigt de butée 28 depuis sa position saillante active 29, dans sa position effacée 30, ledit actionneur 26 peut être défini apte à agir sur la tringle de commande 36 pour retirer le cliquet 35 de son action de blocage sur la roue à rochet 34 et ainsi libérer la descente des moyens de relevage 8.

Inversement, en repoussant le doigt de butée 28 depuis sa position effacée 30 dans sa position saillante active 29, l'actionneur 26 ramène, par l'intermédiaire de la tringle de commande 36, le cliquet 35 en action sur la roue à rochet 34, ces mouvements étant illustrés sur la figure 2 ci-jointe au moyen de flèches peu épaisses.

Il convient d'observer qu'en tant que variante, représentée sur les figures 6 et 7 des dessins ci joints, l'action du levier formant butée 4 d'un dispositif de butée 1, plutôt que d'être répercutée sur une seule came 23 par l'intermédiaire d'une bielle 19, ce levier 4 peut agir simultanément sur plusieurs cames 23, 23A, par l'intermédiaire d'une ou plusieurs bielles 19, 19A tout en restant dans l'objet et l'esprit de la présente invention.

Plus particulièrement, sur les figures 6 et 7, est illustrée cette variante dans laquelle des dispositifs de butée 1 et 1A conformes à l'invention sont montés « en série », tenant compte du fait que, bien évidemment, plus de deux dispositifs de butée peuvent être montés en série les uns derrière les autres.

Ainsi, sur la figure 6, le levier de butée 4 du dispositif de butée 1, ou dispositif de butée aval tenant compte de la direction 5 de déplacement du support de convoyage 3, est en position d'attente 6 d'un objet 2 à soulever au-dessus dudit support de convoyage 3.

Par pivotement autour de son axe 16, ledit levier de butée 4 passe, sous l'action de l'énergie cinétique de l'objet 2 qui se déplace sur le support de convoyage 3, en l'occurrence une plaque support 2 de produits de boulangerie, depuis cette position d'attente 6 dans sa position de butée 7, cette dernière étant visible sur la figure 7.

Le passage du levier 4 depuis sa position d'attente 6 dans sa position de butée 7 entraîne, par l'intermédiaire notamment de la bielle 19, le passage des moyens de relevage 8 du dispositif de butée 1, ces moyens de relevage 8 se présentant sous la forme d'une pluralité de galets 17, depuis leur position de repos 10 visible sur la figure 6 dans leur position de relevage 11 illustrée sur la figure 7, l'objet 2 étant alors désolidarisé du support de convoyage 3 et soulevé au-dessus de celui-ci.

Le passage des galets 17 du premier dispositif de butée 1 dans leur position de relevage entraine le passage du levier formant butée 4A du second dispositif de butée 1A, ou dispositif de butée amont, depuis sa position inactive effacée 13A illustrée sur la figure 6 dans sa position d'attente 6A visible sur la figure 7.

Un tel entraînement du levier 4A du second dispositif de butée 1A s'effectue plus particulièrement par l'intermédiaire d'une structure support 51 se présentant alors sous la forme d'un parallélogramme déformable et comprenant notamment au moins une bielle 18.

Le passage du levier formant butée 4 du premier dispositif de butée 1 de sa position d'attente 6 dans sa position de butée 7 agit sur ladite structure support 51 en déformant le parallélogramme déformable, celui-ci passant d'une position aplatie visible sur la figure 6 à une position déployée illustrée sur la figure 7, tandis que, simultanément, les galets 17 passent de leur position de repos 10 à leur position de relevage 11.

Un tel passage du parallélogramme déformable 51 dans sa position déployée agit sur une tringle 54 à laquelle il est relié. L'une des extrémités de ladite tringle 54, l'extrémité amont 55, va alors se déplacer, vers l'aval, tenant compte de la direction de déplacement 5 du support de convoyage 3, le long d'une lumière 56 que comporte le dispositif de butée 1A, repoussant le levier 4A formant butée du second dispositif de butée 1A depuis sa position inactive effacée 13A (figure 6) dans sa position d'attente 6A de l'objet 2A (figure 7).

L'objet 2A qui se déplace sur le support de convoyage 3 va alors venir repousser le levier 4A formant butée depuis sa position d'attente 6A dans une position de butée (non représentée), ce qui, sous l'effet de moyens de d'entraînement similaires à ceux du dispositif de butée 1, comportant notamment une bielle 19A, en liaison avec ledit levier 4A, entraine le passage des moyens de relevage 17A sous la forme de galets depuis leur position d'attente 10A (figure 7) dans une position de relevage (non illustrée). L'objet 2A est alors également désolidarisé du support de convoyage 3.

Lorsque les objets 2 et 2A peuvent à nouveau circuler sur le support de convoyage 3, l'actionneur 26 pilote le passage du levier 4 formant butée depuis sa position de butée 7 dans sa position inactive effacée (non illustrée) et l'objet 2, par gravité, regagne ledit support de convoyage 3. La descente de l'objet 2 entraine, sous l'effet du mouvement de la tringle 54, dont l'extrémité 55 est repoussée vers l'amont, le passage du levier 4A depuis sa position de butée dans sa position inactive effacée 13A permettant ainsi également la descente de l'objet 2A.

A noter que les détails du mode de réalisation décrit en référence aux figures 2 à 4 sont transposables au second dispositif de butée 1A, à l'exception des caractéristiques relatives aux moyens de commande 12 et aux moyens complémentaires 14 coopérant avec lesdits moyens de commande 12, étant donné que le passage du levier 4A du second dispositif de butée 1A depuis sa position inactive effacée 13A dans sa position d'attente 6A puis de sa position de butée (non illustrée) dans sa position inactive effacée 13A se fait sous l'action des mouvements mécaniques du premier dispositif de butée 1.

A présent, dans le cadre du mode de réalisation du dispositif de butée 1 correspondant aux figures 8 et 9, il est plus particulièrement visible des moyens d'entraînement 9 comportant une pluralité de cames 23, en particulier une came amont 23a positionnée du côté de l'extrémité amont du support de convoyage 3 et une came aval 23b positionnée du côté de l'extrémité aval de ce même support de convoyage 3. Chacune des cames 23a et 23b porte au moins un galet 17, ces cames 23a et 23b étant reliées au travers d'une bielle de synchronisation de rotation 37 de sorte que l'action de commande de rotation de l'une des cames entraine une rotation d'amplitude similaire ou différente, selon l'implantation de ladite bielle 37.

De manière significative, il est ici illustré une solution où lesdits galets 17 définissent ensemble une surface d'appui 38 sur laquelle peut reposer un objet 2, laquelle surface d'appui 38 est définie en pente descendante dans la direction 5 de déplacement des objets 2 le long du support de convoyage 5.

Les avantages d'une telle surface d'appui 38 inclinée sont de deux ordres :
- Repousser un objet 2 relevé en appui contre le levier formant butée 4 ;
- Favoriser le retour de cet objet 2 sur le support de convoyage 3 une fois libéré par ledit levier 4 formant butée.

Tout comme dans le mode de réalisation précédent, ce levier formant butée 4 est monté basculant autour d'un axe 16 perpendiculaire à la direction de déplacement 5 pour permettre à ce levier 4 de passer de sa position d'attente 6, visible sur la figure 9, à sa position de butée 7.

De manière particulière, illustrée sur la figure 8 jointe, ce déplacement de ce levier 4 depuis cette position d'attente 6 dans la position de butée 7 s'effectue contre l'action de moyens de rappel élastique 39, avantageusement contrecarrée par l'action du poids de l'objet 2 soulevé et maintenu en légère pente descendante contre ledit levier 4.

Comme cela apparaîtra plus en avant, lesdits moyens de rappel élastique 39 composent, en partie, lesdits moyens de commande 12.

Quant aux moyens d'entraînement 9, ils comportent en dehors d'au moins une came 23, également une bielle 19 dont une première extrémité 20 est reliée par des moyens d'articulation au levier 4 formant butée, cette fois-ci dans la portion de ce dernier au-dessus de son axe de pivotement 16.

La bielle 19 est encore reliée, à son extrémité opposée 22, au moins par des moyens d'articulation, à une came 23, notamment la came aval 23b, là encore de manière excentrée par rapport à l'axe 24 de cette dernière.

Les moyens de commande 12 comportent, là encore, un actionneur 26 par exemple du type actionneur magnétique, notamment un électroaimant, susceptible d'amener le levier 4 formant butée depuis sa position de butée 7 dans sa position inactive effacée 13.

En complément de cet actionneur 26, en dehors de l'électroaimant précité, le dispositif de butée 1 comporte ici encore un ressort 40 pour repousser inversement le levier 4 formant butée depuis cette position inactive effacée 13 dans la position d'attente 6, ceci en combinaison avec les moyens de rappel élastique 39.

En somme, le ressort 40, susceptible de repousser le levier 4 depuis sa position inactive effacée 13 dans sa position d'attente 6, constitue alors substantiellement, dans ce mode de réalisation, les moyens complémentaires 14 coopérant avec les moyens de commande 12.

Pour en revenir à l'électroaimant de l'actionneur 26, celui-ci, en tirant vers le bas le levier 4 formant butée, efface la butée qu'il constitue au défilement de l'objet 2 préalablement arrêté et soulevé.

L'objet 2 ayant préalablement repoussé ce levier 4 en avant dans la position de butée 7 contre l'action des moyens de rappel élastique 39, ceux-ci commandent le basculement de ce levier 4 autour de l'axe 16, en sens inverse, depuis une position inactive aval 13a (non visible sur la figure) dans une position inactive amont 13b, quand, ensuite, le ressort 40 repousse le levier 4 vers le haut dans sa position d'attente 6.

Pour éviter que les moyens de rappel élastique 39 soient de raideur trop importante, empêchant le levier 4 d'être repoussé depuis sa position d'attente 6 dans sa position de butée 7 sous l'impulsion de l'objet 2, il est important que ces moyens de rappel élastique 39 aient pour seule contrainte d'assurer un basculement inverse du levier 4 depuis la position inactive aval 13a dans la position inactive amont 13b, sans que ce basculement ne génère une action sur la ou les cames 23 au travers de la bielle 19.

C'est là qu'intervient la course à vide 15, au travers de laquelle lesdits moyens d'entrainement 9 actionnent les moyens de relevage 8, entre, d'une part, le passage du levier 4 depuis sa position de butée 7 dans sa position d'attente 6 en passant par la position d'attente inactive effacée 13, et, d'autre part, le passage des moyens de relevage 8 depuis la position de relevage 11 dans la position de repos 10.

Ainsi, cette course à vide 15 est définie au niveau de la liaison articulée de la deuxième extrémité 22 de la bielle 19 sur la came 23, en particulier la came aval 23b.

Dans le mode de réalisation particulier illustré sur la figure 8, cette course à vide 15 est définie par une lumière 41 concentrique à l'axe 24 de la came 23b, lumière 41 le long de laquelle peut se déplacer cette extrémité 22 de la bielle 19.

Aussi, au moment du rappel du levier 4 formant butée, par les moyens de rappel élastique 39, le basculement de ce levier 4 sur lequel est fixée l'extrémité 20 de la bielle 19 conduit à repousser celle-ci et au libre déplacement de l'extrémité 22 de cette bielle 19 le long de la lumière 41 sans entraînement des moyens de relevage 8.

A cet instant, le poids de l'objet 2 sur les galets 17 génère un couple sur la ou les came(s) 23 duquel résulte le retour progressif des moyens de relevage 8 depuis leur position de relevage 11 dans leur position de repos 10.

Il convient de remarquer que pendant tout le temps où l'objet 2 vient à nouveau reposer sur le support de convoyage 3, du fait de son propre poids, sous l'influence du plan incliné descendant de la surface d'appui 38 définie par les galets 17 et/ou de l'abaissement des moyens de relevage 8, puis du dégagement, par le support de convoyage 3, de cet objet 2 au-dessus du dispositif de butée 1, le levier 4 doit être maintenu dans sa position inactive effacée 13, c'est-à-dire par rapport au plan que définit le support de convoyage 3.

Ceci peut être assuré par l'électroaimant de l'actionneur 26 maintenu alimenté pendant tout ce temps. Il peut toutefois en découler un dysfonctionnement de cet électroaimant.

Aussi il est prévu, dans le cadre de ce second mode de réalisation, des moyens auxiliaires 42 du maintien du levier 4 dans une position reculée correspondant à la position inactive effacée 13.

De tels moyens auxiliaires 42 peuvent être du type électromécanique dont l'actionnement est, par exemple, généré sous l'impulsion des moyens de commande 12 ramenant le levier 4 depuis sa position de butée 7 dans sa position inactive effacée 13, tandis que la fin de commande d'actionnement de ces moyens d'auxiliaire 42 peut dépendre d'une temporisation.

Dans un autre mode de réalisation correspondant à la solution illustrée dans les figures 8 et 9 ces moyens auxiliaires 42 sont définis de type mécanique et assurent le maintien reculé du levier 4 tant que les moyens de relevage 8 n'ont pas regagné leur position de repos 10.

Ainsi, ces moyens auxiliaires 42 dans ce mode de réalisation comportent tout d'abord une barrière de retenue 43 assurant, en combinaison avec au moins un ergot de retenue 44 équipant le levier 4, le maintien de ce dernier dans sa position reculée correspondant à la position inactive effacée 13 après commande de ce recul sous l'impulsion de l'actionneur 26 et, ceci pendant le basculement de ce levier 4 autour de son axe depuis sa position inactive aval 13a vers la position inactive amont 13b, sous l'impulsion des moyens de rappel élastique 39.

Plus particulièrement, la barrière de retenue 43 comporte un premier canal de passage 45 dans lequel peut s'engager l'ergot de retenue 44 pour passer du dessus de cette barrière 43 sous cette dernière sous la commande du recul du levier 4 par l'actionneur 26, pour passer depuis sa position de butée 7 dans sa position inactive effacée 13.

Une fois traversé ce premier canal 45, l'action de la barrière de retenue 43 sur l'ergot de retenu 44 empêche le levier 4 de remonter sous l'impulsion du ressort 40 pendant que les moyens de rappel élastique 39 ramène ledit levier 4 par basculement inverse dans la position inactive amont 13b.

Par ailleurs, la barrière de retenue 43 comporte un second canal de passage 46 permettant à l'ergot de retenu 44 de repasser au-dessus de cette barrière de retenue 43 lorsque le levier 4 a été ramené par les moyens de rappel élastique 39 dans cette position inactive amont 13b.

Cependant, les moyens auxiliaires 42 sont complétés par un bras de blocage 47 dont une extrémité 48 est montée articulée sur la came 23, notamment la came aval 23b, tandis que l'extrémité opposée 49 de ce bras de blocage 47 est définie apte à constituer une barrière d'obturation au passage de l'ergot de retenu 44 dans le canal de passage 46.

Plus particulièrement, cette extrémité 49 du bras de blocage 47 empêche l'ergot de retenue 44 de traverser ce second canal de passage 46 tant que les moyens de relevage 8 n'ont pas regagné la position de repos 10.

Etant fixée au travers de son extrémité 48 sur la came 23b, de manière excentrée à l'axe 24 de cette dernière, la rotation de cette came 23b confère un déplacement audit bras de blocage 47, par ailleurs guidé par l'intermédiaire de moyens de guidage 50 appropriés pour générer sa fonction de barrière au passage dans le second canal 46 ou, selon le cas, une fonction de libération de ce passage.

Il convient d'observer que la course des moyens de relevage 8 entre leur position de repos 10 et leur position de relevage 11 peut être limitée soit par une limitation de course de basculement du levier 4 et/ou une limitation de course agissant sur les moyens d'entraînement 9.

C'est cette solution qui est illustrée dans les figures du second mode de réalisation au travers d'une butée de came 52 engagée dans une encoche 53 d'une came 23, plus particulièrement de la came amont 23a.

L'amplitude de cette encoche 53 détermine dans ce cas l'amplitude de rotation de la came 23 par rapport à ladite butée de came 52.

La figure 9 est une variante du mode de réalisation qui vient d'être décrit où le basculement du levier 4 formant butée depuis sa position inactive aval 13a vers la position inactive amont 13b est obtenue non pas par l'intermédiaire de moyens de rappel élastique 39 mais par effet gravitaire.

En somme, ce levier formant butée 4 est monté basculant autour de son axe de pivotement 16 de sorte à exercer, par rapport à cet axe de pivotement 16, un couple de rappel pour le ramener depuis sa position de butée 7 dans la position d'attente 6, en l'occurrence, plus particulièrement, depuis la position inactive aval 13a vers la position inactive amont 13b.

A noter que ce couple de rappel peut découler du poids du levier 4 et/ou de l'actionneur 26 agissant sur ce dernier, en particulier pour l'amener dans sa position inactive effacée 13.

A noter encore que dans un tel mode de réalisation, l'objet 2 que l'on vient arrêter et relever agit, au travers de son poids, contre ce couple de rappel en repoussant le levier 4 depuis sa position d'attente 6 dans sa position de butée 7.

L'ensemble des moyens composant le dispositif de butée 1 selon l'invention peuvent être intégrés dans une structure support 51 schématiquement illustrée dans les figures 6 et 7 correspondant au premier mode de réalisation.

A noter que cette structure support 51 peut être définie par le bâti du support de convoyage 3.

A présent, dans le cadre du troisième mode de réalisation du dispositif de butée 1, décrit en référence aux figures 10 à 14, il est plus particulièrement illustré des moyens de relevage 8 se présentant, cette fois, sous la forme d'un chariot mobile de relevage 8' pour soulever au moins une plaque support 2, circulant sur le support de convoyage 3.

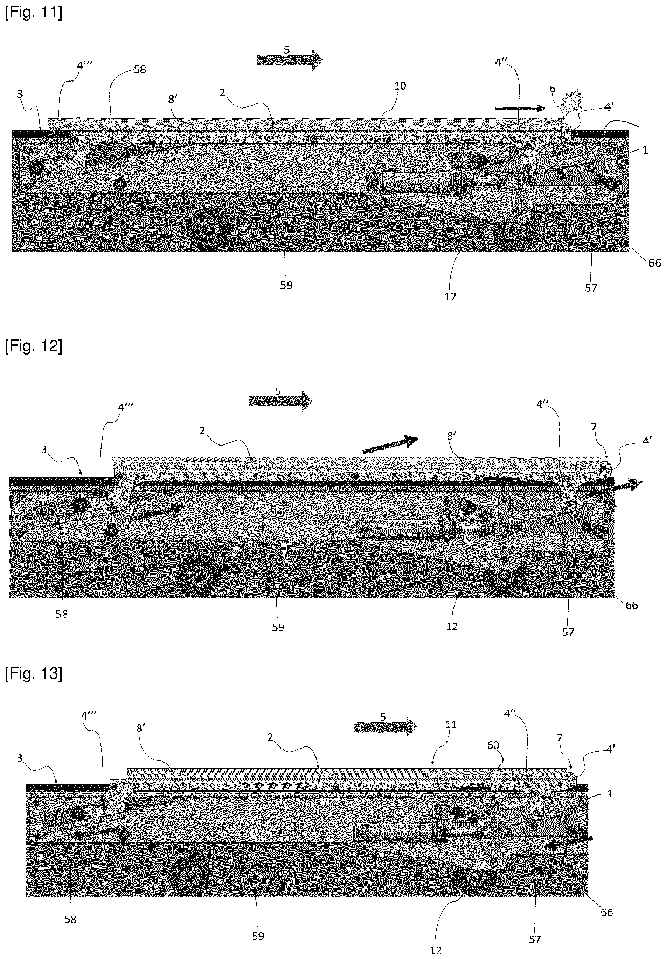

Ledit chariot mobile 8' est conçu mobile dans la direction de déplacement desdites plaques support 2 pour passer d'une position de repos 10 où il se trouve en dessous du plan que définit ledit support de convoyage 3 (voir figure 10 et 11 notamment), dans une position de relevage 11 dans laquelle il est au-dessus dudit plan (illustrée dans les figures 12 et 13).

Dans ce mode de réalisation, le levier formant butée 4, est défini mobile dans la direction 5 de déplacement des plaques support 2, entre une position d'attente 6, illustrée sur les figures 10 et 11, et une position de butée 7, visible sur la figure 13 notamment. Selon ce mode de réalisation, ce levier formant butée 4 est directement relié aux moyens de relevage 8 constitués par le chariot mobile 8' susmentionné.

Ledit levier formant butée 4 comporte un élément formant butoir 4' à l'extrémité aval dudit chariot mobile de relevage 8', tenant compte du sens de déplacement 5 des plaques support 2 sur le support de convoyage 3, en se présentant saillant par rapport à une surface de réception sensiblement plane dudit chariot mobile 8', surface sur laquelle est prévue de reposer une plaque support 2.

Dans la position d'attente 6 du levier 4 formant butée mobile, illustrée figure 10, l'élément formant butoir 4' fait saillie par rapport au plan que définit ledit support de convoyage 3 en sorte que, une plaque support 2, entrainée sous l'impulsion dudit support de convoyage 3 et arrivant au niveau dudit élément formant butoir 4', entre en contact avec celui-ci, comme cela a été représenté sur la figure 11 des dessins ci-joints.

Sous l'effet du choc de ladite plaque support 2 contre l'élément formant butoir 4', symbolisé sur la figure 11, et de l'énergie cinétique de ladite plaque 2, du fait de son déplacement à une vitesse plus ou moins importante sur le support de convoyage 3, le chariot mobile de relevage 8' est repoussé dans la direction de déplacement de ladite plaque 2, ce qui est illustré sur la figure 12.

Ledit levier formant butée 4 est prolongé, sous le chariot mobile 8', par au moins une console support d'au moins un galet 4" en appui sur une rampe 57 d'inclinaison ascendante dans le sens de déplacement des plaques 2. Cette rampe 57 transforme le déplacement sensiblement horizontal du chariot mobile 8', sous l'impulsion de la plaque support 2, en un déplacement à composante verticale ascendant.

De manière préférentielle, et comme illustré sur les figures 10 à 14 jointes, ledit levier formant butée 4 comporte, ainsi, au moins une console support aval d'au moins un galet 4" et au moins une console support amont d'au moins un galet 4‴, préférentiellement s'étendant sous le chariot mobile 8' sensiblement aux extrémités respectivement aval et amont de ce dernier.

Les galets de chacune de ces consoles support coopèrent avec des rampes 57, 58 d'inclinaison ascendante dans le sens de déplacement des plaques 2 et disposées en correspondance sous ledit chariot mobile 8'.

Cette ou ces rampe(s) 57, 58, associée(s) à une structure support adaptée 59, définissent les moyens d'entrainement 9 desdits moyens de relevage 8.

A propos de cette structure support 59, celle-ci peut emprunter la forme de deux flasques latéraux entretoisés, entre lesquels s'inscrit sensiblement le chariot mobile 8'. Au niveau de ces flasques latéraux sont fixés, ou associés, les différents moyens décrits ci-après.

Pour en revenir à présent au déplacement à composante verticale ascendant du chariot mobile 8' correspondant aux moyens de relevage 8, le levier formant butée 4 passe, au travers de ce déplacement, d'une position d'attente 6 dans une position de butée 7.

Dans ce troisième mode de réalisation de l'invention, le dispositif de butée 1 comporte également des moyens de maintien 60 du levier formant butée 4 dans cette position de butée 7, et donc du chariot mobile 8' dans sa position de relevage 11.

Ces moyens de maintien 60 du levier formant butée 4 dans sa position de butée 7 sont avantageusement définis sous forme d'un cliquet.

Dans le cadre du mode de réalisation illustré, ces moyens de maintien 60 comportent d'une part, une lame à dents de scie 61 associée au chariot mobile 8', plus particulièrement, comme illustré, à la console support de galet 4". La denture 62 de cette lame à dents de scie 61 est définie apte à coopérer avec un loquet à rappel élastique 63 en position de blocage. Celui-ci comporte plus particulièrement un doigt de blocage 64 qui est apte à coopérer avec ladite denture 62 de la lame à dents de scie 61 pour maintenir ledit levier formant butée 4 dans la position de butée 7, tout en empêchant le chariot mobile 8' de regagner sa position de repos 10 sous l'effet de son poids.

La coopération entre le doigt de blocage 64 du loquet à rappel élastique 63 en position de blocage et la denture 62 de la lame à dents de scie 61 est plus particulièrement illustrée sur la figure 13.

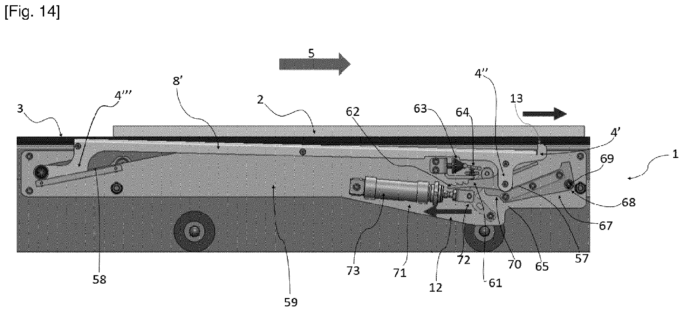

Quant aux moyens de commandes 12 de déplacement du levier formant butée 4 entre la position de butée 7 et une position inactive effacée 13 au passage d'un objet 2, illustrée figure 14, ils comportent des moyens de basculement 65 de la rampe à pente ascendante 57 qui est disposée sensiblement sous l'extrémité aval du chariot mobile de relevage 8', depuis une position de commande de relevage 66 (visible sur les figures 10 à 13) dans une position d'effacement 67 (représentée sur la figure 14).

Au travers de la console support de galet 4" coopérant avec cette rampe 57, le basculement de celle-ci permet d'amener l'élément formant butoir 4' depuis sa position saillante au-dessus du plan du support de convoyage 3 dans une position effacée sous ce plan, et donc le passage du levier formant butée 4 depuis sa position formant butée 7 dans ladite position inactive effacée 13, visible sur la figure 14.

Ces moyens de basculement 65 sont définis par un montage pivotant de la rampe à pente ascendante 57 à son extrémité aval 68 autour d'un axe de pivotement 69.

Quant à son extrémité amont 70, ladite rampe 57 est solidaire de moyens de commande de basculement 71. Ceux-ci peuvent emprunter différentes formes de réalisation. Ils sont ici illustrés sous forme d'une genouillère 72 coopérant de manière articulée avec cette extrémité amont 70 de ladite rampe 57, ladite genouillère 72 étant repliée ou étendue sous l'action d'un vérin 73 complétant lesdits moyens de commande 71.

De manière avantageuse, la commande de basculement de la rampe 57 depuis sa position de commande de relevage 66 dans sa position d'effacement 67 définit des moyens de débrayage des moyens de maintien 60 en libérant leurs actions sur le levier formant butée 4. Concrètement, sous l'effet de l'affaissement de la rampe 57 dans sa position d'effacement 67, elle entraine vers le bas la console support de galet 4", donc la lame à dents de scie 61. Ceci a pour conséquence le dégagement de cette lame 61 par rapport au doigt de blocage 64 du loquet 63.

N'étant plus retenu dans sa position de butée 7, le levier formant butée 4 peut gagner sa position inactive effacée 13 se traduisant par l'affaissement du chariot mobile 8' sous le plan du support de convoyage 3, de sorte que la plaque 2 supportée par ce chariot mobile 8' vient à nouveau reposer sur ce support de convoyage 3 pour être entrainée, en aval, sur ce dernier.

Quant aux moyens complémentaires 14 pour repousser le levier formant butée 4 depuis sa position inactive effacée 13 dans sa position d'attente 6, ils sont définis par les moyens de commande de basculement 71 de la rampe 57, à l'extrémité aval sous le chariot mobile 8'.

Plus particulièrement, ces moyens de commande de basculement 71 sont définis aptes à repousser cette rampe 57 depuis sa position d'effacement 67 dans la position de commande de relevage 66.

Au travers de l'appui sur cette rampe 57 de la console support de galet 4" que comporte ledit levier formant butée 4, celui-ci est relevé pour atteindre sa position d'attente 6.

Les avantages découlant de la présente invention consistent en ce que l'arrêt d'un objet 2 se déplaçant sur et par l'intermédiaire d'un support de convoyage 3 intervient de manière progressive sous l'effet du basculement d'un levier formant butée 4 depuis une position d'attente 6 dans une position de butée 7.

On évite donc ainsi les chocs susceptibles de créer des nuisances sonores et dommageables pour les objets transportés.

Par ailleurs, en mettant à profit l'énergie cinétique des objets 2 en mouvement sous l'influence du support de convoyage 3, pour soulever ces objets 2, en les dégageant de la surface de convoyage, on vient éviter le frottement entre cette dernière et lesdits objets 2.

Dans l'application plus particulière à des plaques de transport de produits de boulangerie, viennoiserie ou similaires, on évite ainsi l'usure des plaques et, de manière essentielle, la formation de poussières susceptibles de se déposer sur les produits alimentaires transportés sur de telles plaques.

Au moyen du dispositif de butée selon l'invention, on garantit également une qualité optimale des produits de boulangerie finalement obtenus après leur transport sur un support de convoyage équipé d'un tel dispositif. En effet, en cas de chocs subis par une plaque, la pâte des produits boulangers qu'elle supporte est susceptible de s'effondrer, et les produits peuvent subir un déplacement sur la plaque, influant, de manière négative, l'aspect visuel et les qualités gustatives des produits, qui sont moins levés, présentent une cuisson non-homogène, etc. De tels écueils sont avantageusement évités grâce à la mise en œuvre du présent dispositif de butée.

## Revendications

1. Dispositif de butée (1) pour l'arrêt et le soulèvement d'un objet (2), en particulier une plaque support de produits de boulangerie, pâtisserie, viennoiserie ou similaires, par rapport à un support de convoyage (3), tel qu'une bande ou chaine de transport, ledit dispositif de butée (1) comprenant au moins :
- un levier (4) formant butée mobile dans la direction de déplacement (5) des objets (2) entre une position d'attente (6) et une position de butée (7) ;
- des moyens de relevage (8) d'un objet (2), lesdits moyens de relevage (8) étant actionnés par des moyens d'entrainement (9) en liaison avec ledit levier (4) formant butée, lesdits moyens de relevage (8) étant mobiles entre une position de repos (10) et une position de relevage (11) de l'objet (2) et inversement ;
**caractérisé en ce que** le dispositif de butée (1) comprend:
- des moyens de commande (12) de déplacement du levier (4) formant butée entre la position de butée (7) et une position inactive (13) effacée au passage d'un objet (2) ;
lesdits moyens d'entrainement (9) étant définis pour amener les moyens de relevage (8) d'un objet (2) depuis la position de repos (10) dans la position de relevage (11) de l'objet (2) au passage du levier (4) formant butée depuis sa position d'attente (6) dans sa position de butée (7), lesdits moyens de commande (12) de déplacement de levier (4) coopérant avec des moyens complémentaires (14) pour repousser ledit levier (4) formant butée depuis sa position inactive effacée (13) dans sa position d'attente (6).

2. Dispositif (1) de butée selon la revendication précédente, **caractérisé en ce que** lesdits moyens d'entrainement (9) actionnant les moyens de relevage (8) sont en liaison avec le levier (4) formant butée, au travers d'une course à vide (15) définissant des moyens de temporisation entre, d'une part, le passage du levier (4) formant butée depuis sa position de butée (7) d'objet dans sa position d'attente (6) en passant par sa position inactive effacée (13) et, d'autre part, le passage des moyens de relevage (8) depuis leur position de relevage (11) de plaque dans leur position de repos (10).

3. Dispositif (1) de butée selon l'une quelconque des revendications précédentes, **caractérisé en ce que** lesdits moyens de relevage (8) comportent au moins une pluralité de galets (17) reliés entre eux au moyen d'une structure adaptée (18) comportant au moins une bielle.

4. Dispositif (1) de butée selon l'une quelconque des revendications précédentes, **caractérisé en ce que** lesdits moyens d'entrainement (9) actionnant les moyens de relevage (8) comportent au moins une bielle (19) dont une première extrémité (20) prend appui sur un prolongement (21) dudit levier (4) au-delà de son axe de pivotement (16), bielle (19) dont la seconde extrémité (22) est montée articulée sur une came (23) que comportent lesdits moyens de relevage (8), ladite came (23) étant pivotante autour d'un axe (24) parallèle audit axe de pivotement (16) dudit levier (4), le passage du levier (4) formant butée depuis sa position d'attente (6) dans sa position de butée (7) poussant la bielle (19) qui confère une rotation à la came (23) autour de l'axe (24).

5. Dispositif (1) de butée selon l'une quelconque des revendications précédentes, **caractérisé en ce que** ledit levier (4) formant butée comporte un fourreau (27) dans lequel est monté mobile un doigt de butée (28) entre une position saillante active (29) et une position effacée (30) et **en ce que** lesdits moyens de commande (12) consistent en un actionneur (26) apte, d'une part, à repousser ledit doigt de butée dans une position saillante active lorsque ledit levier (4) occupe ses positions d'attente (6) et de butée (7) et, d'autre part, à retirer ledit doigt de butée (28) dans une position effacée (30) correspondant à la position effacée inactive (13) du levier (4).

6. Dispositif (1) de butée selon la revendication 2 et la revendication 5, **caractérisé en ce que** la course à vide (15) est définie par la mobilité dudit doigt de butée (28) entre sa position saillante active (29) et sa position effacée (30) sous l'effet de l'actionneur (26).

7. Dispositif (1) de butée selon l'une quelconque des revendications précédentes, **caractérisé en ce qu'**il comporte encore des moyens de blocage (31) amenés en position active de blocage (32) lorsque les moyens de relevage (8) sont en position de relevage (11) et repoussés en position de déblocage (33) sous l'action desdits moyens de commande (12).

8. Dispositif (1) de butée selon la revendication précédente, **caractérisé en ce que** lesdits moyens de blocage (31) consistent en une roue à rochet (34) montée sur l'axe (24) de la came (23), ladite came (23) coopérant avec un cliquet (35) sur lequel agit une tringle de commande (36) en liaison avec lesdits moyens de commande (12)

9. Dispositif de butée (1) selon la revendication 1, **caractérisé en ce que** lesdits moyens de relevage (8) de l'objet (2) consistent en un chariot mobile de relevage (8') comportant une surface de réception sensiblement plane sur laquelle est prévue de reposer ledit objet (2), ledit chariot (8') étant conçu mobile dans la direction de déplacement (5) de l'objet (2) sur le support de convoyage (3) pour passer de la position de repos (10), où ledit chariot (8') se trouve en dessous d'un plan que définit ledit support de convoyage (3), à la position de relevage (11) dans laquelle il se trouve au-dessus dudit plan, et **en ce que** ledit levier (4) formant butée, défini mobile entre la position d'attente (6) et la position de butée (7), est directement relié audit chariot mobile de relevage (8'), ledit levier (4) comportant un élément formant butoir (4') à l'extrémité aval dudit chariot mobile (8') en tenant compte de ladite direction de déplacement (5) de l'objet (2), ledit élément formant butoir (4') se présentant saillant par rapport à ladite surface de réception dudit chariot mobile (8') et faisant saillie par rapport au plan que définit ledit support de convoyage (3) lorsque ledit levier (4) formant butée est dans sa position d'attente (6), ledit levier (4) étant prolongé, sous le chariot mobile (8'), par au moins une console support aval d'au moins un galet (4") en appui sur une rampe (57) d'inclinaison ascendante dans la direction de déplacement (5) de l'objet (2) sur le support de convoyage (3), ladite rampe (57) étant associée à une structure support (59) avec laquelle elle définit lesdits moyens d'entrainement (9) desdits moyens de relevage (8), sous la forme du chariot mobile (8'), depuis leur position de repos (10) vers leur position de relevage (11), ledit dispositif (1) comportant également des moyens de maintien (60) du levier (4) formant butée dans sa position de butée (7) et du chariot mobile (8') dans sa position de relevage (11).

10. Dispositif de butée (1) selon la revendication 9, **caractérisé en ce qu'**il comporte, en plus de ladite console support aval d'au moins un galet (4") en appui sur ladite rampe (57), une console support amont d'au moins un galet (4‴) s'étendant sous l'extrémité amont du chariot mobile (8') tenant compte de la direction de déplacement (5) de l'objet (2) sur le support de convoyage (3), ladite console support amont d'au moins un galet (4‴) étant en appui sur une rampe (58) d'inclinaison ascendante dans ladite direction de déplacement (5), ladite rampe (58) étant associée à ladite structure support (59).

11. Dispositif de butée (1) selon la revendication 9 ou la revendication 10, **caractérisé en ce que** la structure support (59) comporte deux flasques latéraux entretoisés entre lesquels s'inscrit ledit chariot mobile (8'), lesdits moyens de maintien (60) du levier (4) formant butée dans sa position de butée (7) et du chariot mobile (8') dans sa position de relevage (11) étant associés auxdits flasques latéraux.

12. Dispositif de butée (1) selon l'une quelconque des revendications 9 à 11, **caractérisé en ce que** lesdits moyens de maintien (60) du levier (4) formant butée dans sa position de butée (7) et du chariot mobile (8') dans sa position de relevage (11) sont définis sous la forme d'un cliquet, et comportent une lame à dents de scie (61) associée à ladite console support de galet (4") du chariot mobile (8'), ladite lame à dents de scie (61) comprenant une denture (62) apte à coopérer avec un doigt de blocage (64) que comporte un loquet (63) à rappel élastique en position de blocage.

13. Dispositif de butée (1) selon l'une quelconque des revendications 9 à 12, **caractérisé en ce que** les moyens de commande (12) de déplacement du levier (4) formant butée entre sa position de butée (7) et sa position inactive effacée (13) comportent des moyens de basculement (65) de la rampe (57) d'inclinaison ascendante depuis une position de commande de relevage (66) de ladite rampe (57) dans une position d'effacement (67) de cette dernière, lesdits moyens de basculement (65) étant définis par un montage pivotant de ladite rampe (57) d'inclinaison ascendante à son extrémité aval (68) autour d'un axe de pivotement (69), l'extrémité amont (70) de ladite rampe (57) étant solidaire de moyens de commande de basculement (71).

14. Dispositif de butée (1) selon la revendication 13, **caractérisé en ce que** lesdits moyens de commande de basculement (71) comportent une genouillère (72) coopérant, de manière articulée, avec ladite extrémité amont (70) de la rampe (57), ladite genouillère (72) étant repliée ou étendue sous l'action d'un vérin (73) complétant lesdits moyens de commande de basculement (71).

15. Dispositif de butée (1) selon l'une quelconque des revendications 13 ou 14, **caractérisé en ce que** les moyens complémentaires (14) pour repousser ledit levier (4) formant butée, depuis sa position inactive effacée (13) dans sa position d'attente (6), sont définis par lesdits moyens de commande de basculement (71), ces derniers étant aptes à repousser ladite rampe (57) depuis sa position d'effacement (67) dans sa position de commande de relevage (66).

## Patentansprüche

1. Anschlagvorrichtung (1) zum Anhalten und Heben eines Objekts (2), insbesondere einer Trägerplatte für Backwaren, Konditoreiwaren, Feingebäck oder dergleichen, in Bezug auf einen Förderträger (3), wie ein Förderband oder eine Förderkette, wobei die Anschlagvorrichtung (1) mindestens Folgendes umfasst:
- einen Hebel (4), der den Anschlag bildet und in der Bewegungsrichtung (5) der Objekte (2) zwischen einer Bereitschaftsposition (6) und einer Anschlagposition (7) beweglich ist;
- Mittel zum Anheben (8) eines Objekts (2), wobei die Mittel zum Anheben (8) durch Antriebsmittel (9) in Verbindung mit dem Hebel (4), der den Anschlag bildet, betätigt werden, wobei die Mittel zum Anheben (8) zwischen einer Ruheposition (10) und einer Position zum Anheben (11) des Objekts (2) und umgekehrt beweglich sind; **dadurch gekennzeichnet, dass** die Anschlagvorrichtung (1) Folgendes umfasst:
- Steuermittel (12) zum Bewegen des Hebels (4), der den Anschlag bildet, zwischen der Anschlagposition (7) und einer inaktiven Position (13), die beim Vorbeiführen eines Objekts (2) gestrichen wird;
wobei die Antriebsmittel (9) so definiert sind, dass sie die Mittel zum Anheben (8) eines Objekts (2) beim Übergang des Hebels (4), der den Anschlag bildet, aus seiner Bereitschaftsposition (6) in seine Anschlagposition (7) aus der Ruheposition (10) in die Anhebeposition (11) des Objekts (2) bringen, wobei die Steuermittel (12) für die Bewegung des Hebels (4) mit komplementären Mitteln (14) zusammenwirken, um den den Anschlag bildenden Hebel (4) aus seiner gestrichenen inaktiven Position (13) in seine Bereitschaftsposition (6) zurückzuschieben.

2. Anschlagvorrichtung (1) nach dem vorhergehenden Anspruch, **dadurch gekennzeichnet, dass** die Antriebsmittel (9), welche die Mittel zum Anheben (8) betätigen, mit dem Hebel (4), der den Anschlag bildet, über einen Leerhub (15) in Verbindung stehen, der Verzögerungsmittel definiert zwischen, einerseits, dem Übergang des den Anschlag bildenden Hebels (4) von seiner Anschlagposition (7) für das Objekt über seine gestrichene inaktive Position (13) in seine Bereitschaftsposition (6) und andererseits dem Übergang der Mittel zum Anheben (8) von ihrer Plattenanhebeposition (11) in ihre Ruheposition (10).

3. Anschlagvorrichtung (1) nach einem der vorhergehenden Ansprüche, **dadurch gekennzeichnet, dass** die Mittel zum Anheben (8) mindestens mehrere Rollen (17) enthalten, die mittels einer angepassten Struktur (18), die mindestens eine Pleuelstange enthält, miteinander verbunden sind.

4. Anschlagvorrichtung (1) nach einem der vorhergehenden Ansprüche, **dadurch gekennzeichnet, dass** die Antriebsmittel (9), welche die Mittel zum Anheben (8) betätigen, mindestens eine Pleuelstange (19) enthalten, deren erstes Ende (20) sich auf einer Verlängerung (21) des Hebels (4) jenseits seiner Schwenkachse (16) abstützt, Pleuelstange (19), deren zweites Ende (22) gelenkig an einem Nocken (23) montiert ist, den die Mittel zum Anheben (8) enthalten, wobei der Nocken (23) um eine Achse (24) parallel zur Schwenkachse (16) des Hebels (4) schwenkbar ist, wobei der Übergang des den Anschlag bildenden Hebels (4) aus seiner Bereitschaftsposition (6) in seine Anschlagposition (7) gegen die Pleuelstange (19) drückt, die den Nocken (23) zu einer Drehung um die Achse (24) veranlasst.

5. Anschlagvorrichtung (1) nach einem der vorhergehenden Ansprüche, **dadurch gekennzeichnet, dass** der Hebel (4), der den Anschlag bildet, eine Hülse (27) enthält, in der ein Anschlagfinger (28) zwischen einer aktiven vorspringenden Position (29) und einer versenkten Position (30) beweglich montiert ist, und dass die Steuermittel (12) aus einem Betätigungsglied (26) bestehen, das in der Lage ist, einerseits den Anschlagfinger in eine aktive vorspringende Position zurückzuschieben, wenn der Hebel (4) seine Bereitschaftsposition (6) und seine Anschlagposition (7) einnimmt, und andererseits den Anschlagfinger (28) in eine gestrichene Position (30) zurückzuziehen, die der gestrichenen inaktiven Position (13) des Hebels (4) entspricht.

6. Anschlagvorrichtung (1) nach Anspruch 2 und Anspruch 5, **dadurch gekennzeichnet, dass** der Leerhub (15) durch die Beweglichkeit des Anschlagfingers (28) zwischen seiner aktiven vorstehenden Position (29) und seiner gestrichenen Position (30) unter der Wirkung des Betätigungsglieds (26) definiert ist.

7. Anschlagvorrichtung (1) nach einem der vorhergehenden Ansprüche, **dadurch gekennzeichnet, dass** sie zudem Blockiermittel (31) enthält, die in eine aktive Blockierposition (32) gebracht werden, wenn sich die Mittel zum Anheben (8) in der Anhebeposition (11) befinden, und unter der Wirkung der Steuermittel (12) in die Freigabeposition (33) zurückgeschoben werden.

8. Anschlagvorrichtung (1) nach dem vorhergehenden Anspruch, **dadurch gekennzeichnet, dass** die Blockiermittel (31) aus einem Sperrklinkenrad (34) bestehen, das auf der Achse (24) des Nockens (23) montiert ist, wobei der Nocken (23) mit einer Sperrklinke (35) zusammenwirkt, auf die eine Steuerstange (36) in Verbindung mit den Steuermitteln (12) einwirkt.

9. Anschlagvorrichtung (1) nach Anspruch 1, **dadurch gekennzeichnet, dass** die Mittel zum Anheben (8) des Objekts (2) aus einem beweglichen Anhebeschlitten (8') bestehen, der eine im Wesentlichen ebene Aufnahmefläche enthält, auf der das Objekt (2) ruhen soll, wobei der Schlitten (8') in der Bewegungsrichtung (5) des Objekts (2) auf dem Transportträger (3) beweglich ausgebildet ist, um von der Ruheposition (10), in der sich der Schlitten (8') unterhalb einer Ebene befindet, die der Förderträger (3) definiert, in die Anhebeposition (11) zu gelangen, in der er sich oberhalb dieser Ebene befindet, und dass der den Anschlag bildende Hebel (4), der zwischen der Bereitschaftsposition (6) und der Anschlagposition (7) beweglich definiert ist, direkt mit dem beweglichen Anhebeschlitten (8') verbunden ist, wobei der Hebel (4) ein den Anschlag bildendes Element (4') am nachgelagerten Ende des beweglichen Schlittens (8') unter Berücksichtigung der Bewegungsrichtung (5) des Objekts (2) enthält, wobei das den Anschlag bildende Element (4') in Bezug auf die Aufnahmefläche des beweglichen Schlittens (8') vorsteht und in Bezug auf die Ebene, die der Förderträger (3) definiert, vorsteht, wenn der Hebel (4), der den Anschlag bildet, sich in seiner Bereitschaftsposition (6) befindet, wobei der Hebel (4) unter dem beweglichen Schlitten (8') durch mindestens eine nachgelagerte Trägerkonsole für mindestens eine Rolle (4") verlängert ist, die sich auf einer aufsteigend geneigten Rampe (57) in der Bewegungsrichtung (5) des Objekts (2) auf dem Förderträger (3) abstützt, wobei die Rampe (57) einer Trägerstruktur (59) zugeordnet ist, mit der sie die Antriebsmittel (9) der Mittel zum Anheben (8) in Form des beweglichen Schlittens (8') aus ihrer Ruheposition (10) in ihre Anhebeposition (11) definiert, wobei die Vorrichtung (1) auch Mittel (60) zum Halten des den Anschlag bildenden Hebels (4) in seiner Anschlagposition (7) und des beweglichen Schlittens (8) in seiner Anhebeposition (11) enthält.

10. Anschlagvorrichtung (1) nach Anspruch 9, **dadurch gekennzeichnet, dass** sie zusätzlich zu der nachgelagerten Trägerkonsole für mindestens eine Rolle (4"), die auf der Rampe (57) aufliegt, eine vorgelagerte Trägerkonsole für mindestens eine Rolle (4‴) enthält, die sich unter dem vorgelagerten Ende des beweglichen Schlittens (8') erstreckt, wobei die Bewegungsrichtung (5) des Gegenstands (2) auf dem Förderträger (3) berücksichtigt wird, wobei die vorgelagerte Trägerkonsole mindestens einer Rolle (4"') auf einer aufsteigend geneigten Rampe (58) in der Bewegungsrichtung (5) aufliegt, wobei die Rampe (58) der Trägerstruktur (59) zugeordnet ist.

11. Anschlagvorrichtung (1) nach Anspruch 9 oder Anspruch 10, **dadurch gekennzeichnet, dass** die Trägerstruktur (59) zwei verstrebte Seitenflansche enthält, zwischen denen der bewegliche Schlitten (8') aufgenommen ist, wobei die Mittel (60) zum Halten des den Anschlag bildenden Hebels (4) in seiner Anschlagposition (7) und des beweglichen Schlittens (8') in seiner Anhebeposition (11) den Seitenflanschen zugeordnet sind.

12. Anschlagvorrichtung (1) nach einem der Ansprüche 9 bis 11, **dadurch gekennzeichnet, dass** die Mittel (60) zum Halten des den Anschlag bildenden Hebels (4) in seiner Anschlagposition (7) und des beweglichen Schlittens (8') in seiner Anhebeposition (11) in Form einer Sperrklinke definiert sind, und ein Sägezahnblatt (61) enthalten, das der Trägerkonsole der Rolle (4") des beweglichen Schlittens (8') zugeordnet ist, wobei das Sägezahnblatt (61) eine Verzahnung (62) umfasst, die geeignet ist, mit einem Blockierfinger (64) zusammenzuwirken, den ein Riegel (63) mit elastischer Rückstellung in die Blockierposition enthält.

13. Anschlagvorrichtung (1) nach einem der Ansprüche 9 bis 12, **dadurch gekennzeichnet, dass** die Steuermittel (12) zur Bewegung des den Anschlag bildenden Hebels (4) zwischen seiner Anschlagposition (7) und seiner gestrichenen inaktiven Position (13) Mittel zum Kippen (65) der aufsteigend geneigten Rampe (57) aus einer Steuerposition zum Anheben (66) der Rampe (57) in eine Position zum Streichen (67) derselben enthalten, wobei die Mittel zum Kippen (65) durch eine schwenkbare Montage der aufwärts geneigten Rampe (57) an ihrem nachgelagerten Ende (68) um eine Schwenkachse (69) definiert sind, wobei das nachgelagerte Ende (70) der Rampe (57) fest mit Kippsteuermitteln (71) verbunden ist.

14. Anschlagvorrichtung (1) nach Anspruch 13, **dadurch gekennzeichnet, dass** die Kippsteuermittel (71) einen Kniehebel (72) enthalten, der gelenkig mit dem nachgelagerten Ende (70) der Rampe (57) zusammenwirkt, wobei der Kniehebel (72) unter der Wirkung eines Zylinders (73), der die Kippsteuermittel (71) ergänzt, umgeklappt oder ausgefahren wird.

15. Anschlagvorrichtung (1) nach einem der Ansprüche 13 oder 14, **dadurch gekennzeichnet, dass** die komplementären Mittel (14) zum Zurückschieben des den Anschlag bildenden Hebels (4) aus seiner gestrichenen inaktiven Position (13) in seine Bereitschaftsposition (6) durch die Kippsteuermittel (71) definiert sind, wobei letztere geeignet sind, die Rampe (57) aus ihrer Streichungsposition (67) in ihre Steuerposition zum Anheben (66) zurückzuschieben.

## Claims

1. A stop device (1) for stopping and raising an object (2), in particular a carrier plate for bakery, pastry, viennoiserie products or the like, relative to a conveyor support (3), such as a conveyor belt or chain, said stop device (1) comprising at least:
- a lever (4) forming a stop that is movable in the direction of movement (5) of the objects (2) between a standby position (6) and a stop position (7);
- means (8) for lifting an object (2), said lifting means (8) being actuated by drive means (9) in connection with said lever (4) forming a stop, said lifting means (8) being movable between a rest position (10) and a position (11) for lifting the object (2) and vice versa,
**characterized in that** the stop device (1) comprises:
- control means (12) for moving the lever (4) forming a stop between the stop position (7) and an inactive retracted position (13) when an object (2) passes,
said drive means (9) being defined so as to bring the means (8) for lifting an object (2) from the rest position (10) into the position (11) for lifting the object (2) upon transition of the lever (4) forming a stop from its standby position (6) into its stop position (7), said control means (12) for moving the lever (4) engaging with complementary means (14) for pushing said lever (4) forming a stop from its inactive retracted position (13) into its standby position (6).

2. The stop device (1) according to the preceding claim, **characterized in that** said drive means (9), which actuate the lifting means (8), are connected to the lever (4) forming a stop, through an idle stroke (15) defining means for delaying between, on the one hand, the transition of the lever (4) forming a stop from its object-stopping position (7) into its standby position (6), passing through its inactive retracted position (13), and, on the other hand, the transition of the lifting means (8) from their plate-lifting position (11) into their rest position (10).

3. The stop device (1) according to either of the preceding claims, **characterized in that** said lifting means (8) comprise at least a plurality of rollers (17) connected to each other by means of a suitable structure (18) comprising at least one connecting rod.

4. The stop device (1) according to any of the preceding claims, **characterized in that** said drive means (9) actuating the lifting means (8) comprise at least one connecting rod (19) of which a first end (20) is supported on an extension (21) of said lever (4) beyond its pivot shaft (16), the second end (22) of which connecting rod (19) is mounted in an articulated manner on a cam (23), which said lifting means (8) comprise, said cam (23) pivoting about a shaft (24) parallel to said pivot shaft (16) of said lever (4), the transition of the lever (4) forming a stop from its standby position (6) into its stop position (7) pushing the connecting rod (19), which imparts a rotation to the cam (23) about its shaft (24).

5. The stop device (1) according to any of the preceding claims, **characterized in that** said lever (4) forming a stop comprises a sleeve (27) in which a stop finger (28) is mounted so as to be movable between an active projecting position (29) and a retracted position (30), and **in that** said control means (12) consist of an actuator (26) capable, on the one hand, of pushing said stop finger into an active projecting position when said lever (4) occupies its standby (6) and stop (7) positions and, on the other hand, of withdrawing said stop finger (28) into a retracted position (30) corresponding to the inactive retracted position (13) of the lever (4).

6. The stop device (1) according to claim 2 and claim 5, **characterized in that** the idle stroke (15) is defined by the mobility of said stop finger (28) between its active projecting position (29) and its retracted position (30) under the effect of the actuator (26).

7. The stop device (1) according to any of the preceding claims, **characterized in that** it also comprises locking means (31) that are brought into the active locking position (32) when the lifting means (8) are in the lifting position (11) and pushed into the unlocking position (33) by the action of said control means (12).

8. The stop device (1) according to the preceding claim, **characterized in that** said locking means (31) consist of a ratchet wheel (34) mounted on the shaft (24) of the cam (23), said cam (23) engaging with a pawl (35) on which a control rod (36) acts in conjunction with said control means (12).

9. The stop device (1) according to claim 1, **characterized in that** said means (8) for lifting the object (2) consist of a movable lifting carriage (8') comprising a substantially flat receiving surface on which said object (2) is intended to rest, said carriage (8') being designed to be movable in the direction of movement (5) of the object (2) on the conveyor support (3) from the rest position (10), in which said carriage (8') is located below a plane defined by said conveyor support (3), to the lifting position (11), in which it is above said plane, and **in that** said lever (4) forming a stop, defined so as to be movable between the standby position (6) and the stop position (7), is directly connected to said movable lifting carriage (8'), said lever (4) comprising a member forming a catch (4') at the downstream end of said movable carriage (8'), taking into account said direction of movement (5) of the object (2), said member forming a catch (4') protruding from said receiving surface of said movable carriage (8') and protruding from the plane defined by said conveyor support (3) when said lever (4) forming a stop is in its standby position (6), said lever (4) being extended, under the movable carriage (8'), by at least one downstream support bracket for at least one roller (4") supported on a ramp (57) which is upwardly inclined in the direction of movement (5) of the object (2) on the conveyor support (3), said ramp (57) being associated with a support structure (59) with which it defines said means (9) for driving said lifting means (8), in the form of the movable carriage (8'), from their rest position (10) to their lifting position (11), said device (1) also comprising means (60) for holding the lever (4) forming a stop in its stop position (7) and the movable carriage (8') in its lifting position (11).

10. The stop device (1) according to claim 9, **characterized in that** it comprises, in addition to said downstream support bracket for at least one roller (4") supported on said ramp (57), an upstream support bracket for at least one roller (4‴) extending under the upstream end of the movable carriage (8'), taking into account the direction of movement (5) of the object (2) on the conveyor support (3), said upstream support bracket for at least one roller (4‴) being supported on a ramp (58) which is upwardly inclined in said direction of movement (5), said ramp (58) being associated with said support structure (59).

11. The stop device (1) according to claim 9 or claim 10, **characterized in that** the support structure (59) comprises two braced lateral flanges between which said movable carriage (8') is arranged, said means (60) for holding the lever (4) forming a stop in its stop position (7) and the movable carriage (8') in its lifting position (11) being associated with said lateral flanges.

12. The stop device (1) according to any of claims 9 to 11, **characterized in that** said means (60) for holding the lever (4) forming a stop in its stop position (7) and the movable carriage (8') in its lifting position (11) are defined as a pawl and comprise a saw-toothed blade (61) associated with said roller support bracket (4") of the movable carriage (8'), said saw-toothed blade (61) comprising teeth (62) capable of engaging with a locking finger (64) which comprises a latch (63) with elastic return into the locking position.

13. The stop device (1) according to any of claims 9 to 12, **characterized in that** the control means (12) for moving the lever (4) forming a stop between its stop position (7) and its inactive retracted position (13) comprise means (65) for tilting the upwardly inclined ramp (57) from a position (66) for controlling the lifting of said ramp (57) into a retracted position (67) of said ramp, said tilting means (65) being defined by pivoting mounting of said upwardly inclined ramp (57) at its downstream end (68) about a pivot shaft (69), the upstream end (70) of said ramp (57) being rigidly connected to tilting control means (71).

14. The stop device (1) according to claim 13, **characterized in that** said tilting control means (71) comprise a toggle (72) engaging, in an articulated manner, with said upstream end (70) of the ramp (57), said toggle (72) being retracted or extended under the action of a jack (73) complementing said tilting control means (71).

15. The stop device (1) according to either claim 13 or claim 14, **characterized in that** the complementary means (14) for pushing said lever (4) forming a stop from its inactive retracted position (13) into its standby position (6) are defined by said tilting control means (71), said tilting control means being capable of pushing said ramp (57) from its retracted position (67) into its lifting control position (66).
